# EUROPÄISCHE PATENTSCHRIFT

(11) **EP 1 715 317 B1**
(45) Veröffentlichungstag und Bekanntmachung des Hinweises auf die Patenterteilung: **24.02.2010**
(21) Anmeldenummer: 06008048.8
(22) Anmeldetag: 19.04.2006
(51) Int. Cl.: G01L 1/24, G01L 11/02, G01B 11/16

(54) **Verfahren und Messanordnung zur Bestimmung einer Druckverteilung an der Oberfläche eines Objekts**
Method and measuring apparatus for determining a pressure distribuition on the surface of an object
Procédé et dispositif de mesure destinés à déterminer une distribution de pression sur la surface d'un objet

(30) Priorität: 19.04.2005 DE 102005018170
(43) Veröffentlichungstag der Anmeldung: 25.10.2006
(73) Patentinhaber: Deutsches Zentrum für Luft- und Raumfahrt e.V., 51147 Köln (DE)
(72) Erfinder: Engler, Rolf, Dr., 37083 Göttingen (DE); Henne, Ulrich, Dr., 37073 Göttingen (DE); Kompenhans, Jürgen, Dr., 37130 Gleichen (DE); Klein, Christian, Dr., 37085 Göttingen (DE); Sachs, Werner, Dr., 34346 Hann. Münden (DE)
(74) Vertreter: Rehberg Hüppe + Partner

(56) Entgegenhaltungen:
- FR-A- 2 823 849
- US-A- 5 341 676
- US-A1- 2005 115 331
- ENGLER R H ET AL: "DLR PSP system intensity and lifetime measurements" INSTRUMENTATION IN AEROSPACE SIMULATION FACILITIES, 1997. ICIASF '97 RECORD., INTERNATIONAL CONGRESS ON PACIFIC GROVE, CA, USA 29 SEPT.-2 OCT. 1997, NEW YORK, NY, USA,IEEE, US, 29. September 1997 (1997-09-29), Seiten 46-56, XP010261223 ISBN: 0-7803-4167-8
- RICHARD H ET AL: "PRINCIPLE AND APPLICATIONS OF THE BACKGROUND ORIENTED SCHLIEREN (BOS) METHOD" MEASUREMENT SCIENCE AND TECHNOLOGY, IOP, BRISTOL, GB, Bd. 12, Nr. 9, September 2001 (2001-09), Seiten 1576-1585, XP001208969 ISSN: 0957-0233
- ENGLER R H ET AL: "PRESSURE SENSITIVE PAINT SYSTEMS FOR PRESSURE DISTRIBUTION MEASUREMENTS IN WIND TUNNELS AND TURBOMACHINES" MEASUREMENT SCIENCE AND TECHNOLOGY, IOP, BRISTOL, GB, Bd. 11, Nr. 7, Juli 2000 (2000-07), Seiten 1077-1085, XP001100418 ISSN: 0957-0233

## Beschreibung

Die Erfindung bezieht sich auf ein Verfahren zur Bestimmung der Druckvertellung an der Oberfläche eines Objekts und etwaiger Deformationen des Objekts, das die Merkmale des Oberbegriffs des Patentanspruchs 1 aufweist. Weiterhin bezieht sich die Erfindung auf eine Messanordnung zur Durchführung dieses Verfahrens mit den Merkmalen des Oberbegriffs des Patentanspruchs 7.

### STAND DER TECHNIK

Zur Bestimmung der Druckvertellung an der Oberfläche eines Objekts ist es aus Engler, R. H., und Klein, C. (1997) First Results using the new DLR-PSP-System - Intenslty and Lifetime Measurements, in Conference "Wind Tunnels and Wind Tunnel Test Technlques" Cambridge, UK, ISBN 1857680480, bekannt, auf der Oberfläche des Objekts eine Schicht aus einer so genannte PSP (englische Abkürzung für: Pressure Sensitive Paint), d. h. einer druckempfindlichen Farbe, anzubringen. Diese druckempfindliche Farbe weist in einer offenporigen Trägermatrix eine druckempfindliche Substanz in Form von Molekülen oder Komplexen auf, deren Lumineszenzverhalten von dem in ihrer Umgebung vorliegenden Druck, konkret dem Sauerstoffpartialdruck, abhängt. Bei der druckempfindlichen Substanz kann es sich beispielsweise um Moleküle von Pyren-, Ruthenlum- oder Porphyrenverbindungen oder -derivaten handeln, bei denen die Intensität der Emission von Lumineszenzlicht bei gleich bleibender Anregung mit zunehmendem Sauerstoffpartialdruck abnimmt. Weiterhin enthält die bekannte PSP eine Referenzsubstanz, deren Lumineszenzverhalten nicht von dem in Ihrer Umgebung herrschenden Sauerstoffpartialdruck abhängig ist. Als Referenzsubstanz können beispielsweise Europlumkomplexe verwendet werden. Die Lumineszenz der Raferenzsubstanz gibt sowohl ein Maß für die Anregung der PSP durch eine Anregungslichtquelle als auch ein Maß für die lokale Dicke der Schicht aus der PSP auf der Oberfläche des Objekts wieder. Um auf der Oberfläche des Objekts möglichst gleichmäßige Bedingungen einzuhalten, ist es aus Engler und Klein (s. o.) bekannt, dle Oberfläche des Objekts vor der Auftragung der PSP vorzubehandeln, indem zunächst eine Abschirmschicht auf die Oberfläche aufgetragen wird, die die Oberfläche einheitlich weiß einfärbt. Erst auf dieser Abschirmschicht wird, nötigenfalls unter Zwischenordnung einer Kontaktschicht, um die Anhaftung zu verbessern, die PSP aufgetragen. Da die Abschirmschicht weiß eingefärbt ist, kann durch einen blauen Pigmentzuschlag zu der PSP die Auftragungsdicke der PSP mit dem Auge relativ gut überwacht werden. Bei der eigentlichen Bestimmung der Druckverteilung an der Oberfläche des Objekts wird die PSP mit einer Anregungslichtquelle üblicherweise Im UV-Bereich zu Lumineszenz angeregt, wobei die Messsubstanz in einem anderen Wellenlängenbereich Lumineszenzlicht emittiert als die Referenzsubstanz. Das Lumineszenzlicht von den beiden Substanzen kann daher durch Verwendung unterschiedlicher schmalbandiger Bandpassfilter vor derselben Kamera unterschieden werden.

Die Bestimmung der Druckverteilung an einer Oberfläche eines Objekts mittels PSP erfolgt z. B. bei Versuchen an Modellen In Wlndkanälen. Bei diesen Versuchen ist es auch wichtig, sowohl die Lage des Objekts in dem Windkanal, insbesondere relativ zu seiner Anströmung festzustellen bzw, zu überwachen, und auch etwaige Deformationen, d. h. Formveränderungen des Objekts, insbesondere als Auswirkung seiner Anströmung, zu erfassen. Hierzu ist es bekannt, Marklerungspunkte an der Oberfläche des Objekts stereoskopisch zu beobachten. Jede Lageveränderung der Markierungspunkte weist auf eine Verlagerung des Objekts und/oder eine Deformation des Objekts hin. Zu diesem Zweck ist es aus Engler und Klein (s, o.) bekannt, an der Oberfläche des Objekts einzeine Markierungspunkte auszubilden, indem die PSP in kreisförmigen Bereichen entfernt wird. Diese Markierungspunkte sind sowohl bei Beobachtung des Lumineazenzlichts von der Messsubstanz als auch der Referenzsubstanz sichtbar. Engler und Klein (s. o.) beschreiben damit ein Verfahren mit dem Merkmal des Oberbegriffs des Patentanspruchs 1 und eine Messanordnung mit den Merkmalen des Oberbegriffs des Patentanspruchs 7.

Probleme treten bei dem bekannten Verfahren und der bekannten Messanordnung auf, wenn sich beispielsweise Turbulenzen an der Oberfläche des Objekts oberhalb der Marklerungspunkte ausbilden, well dies so zu einer Verschiebung der Abbildung der Markierungspunkte führen können, ohne dass sich die Markierungspunkte mit dem Objekt tatsächlich im Raum verlagert haben. Außerdem ist die optimale Anordnung der Marklerungspunkte eine recht komplexe Aufgabe. Wenn beispielsweise die Markierungspunkte jeweils in Knotenpunkten einer auftretenden Schwingung der Oberfläche des Objekts angeordnet werden, wird die Schwingung bei einer Überwachung der Lage der Markierungspunkte nicht erkannt. Außerdem kann die Dichte der Marklerungspunkte nicht sehr groß gewählt werden, da in dem Bereich jedes Marklerungspunkts die Bestimmung der Druckvertellung an der Oberfläche des Objekts aufgrund der Entfernung der PSP nicht mehr möglich ist.

Es ist bekannt, Deformationen eines Objekts mittels IPCT (englische Abkürzung für: Image Pattern Correlation Technique) zu erfassen. Dabei wird ein auf die Oberfläche des Objekts projiziertes oder aufgetragenes zufälliges Punktemuster zu verschiedenen Zeitpunkten in gleicher Weise abgebildet. Die Bestimmung der Korrelation der beiden Abbildungen ermöglicht es, Deformationen der Oberfläche des Objekts durch Verschiebung einzeiner Punkte und Punktgruppen des zufälligen Punktemusters nachzuvollziehen. Insbesondere dann, wenn die Abbildungen des Punktemusters aus unterschiedlichen Richtungen, d. h. stereoskopisch, erfolgen, kann die räumliche Deformation der Oberfläche des Objekts mit IPCT recht genau erfasst werden.

Weiterhin ist es bekannt, Turbulenzen bzw, die mit ihnen einhergehenden Dichtegradientenfelder dadurch zu bestimmen, dass ein hinter dem jeweiligen Dichtegradientenfeld liegendes zufälliges Punktemuster einmal durch das Dichtegredientenfeld hindurch und einmal ohne das Dichtegradientenfeld in ansonsten gleicher Weise abgebildet wird. Die Verschlebungen von einzeinen Punkten bzw. Punktgruppen zwischen den beiden Abbildungen können lokalen Dichtegredienten in dem Dichtegradientenfeld zugeordnet werden. Eine räumliche Auflösung des Dichtegradientenfelds verlangt eine Betrachtung des zufälligen Punktemusters durch das Dichtagradientenfeld in mindestens zwei unterschiedlichen Richtungen. Die Messanordnung dieses bekannten Verfahrens, das als BOS (englische Abkürzung für: Background Oriented Schlieren) bezelchnet wird, ist der Messanordnung bei der IPCT (s. o.) weitgehend identisch. Die Unterschiede liegen auf dem Gebiet der Auswertung der Abbildungen des Punktemusters.

### AUFGABE DER ERFINDUNG

Der Erfindung liegt die Aufgabe zugrunde, ein Verfahren mlt den Merkmalen des Oberbegriffs des Patentanspruchs 1 und eine Messanordnung zu dessen Durchführung mit den Merkmalen des Oberbegriffs des Patentanspruchs 7 aufzuzeigen, die es erlauben, dle Bestimmung der Druckverteilung und die Bestimmung etwaiger Deformation des Objekts in denselben Oberflächenbereich des Objekts parallel und vollflächig durchzuführen.

### LÖSUNG

Dle Aufgabe der Erfindung wird durch ein Verfahren mlt den Merkmalen des Patentanspruchs 1 und eine Messanordnung mit den Merkmalen des Patentanspruchs 7 gelöst. Vorteilhafte Ausführungsformen des Verfahrens sind in den Unteransprüchen 2 bis 6 beschrieben. Vorteilhafte Ausführungsformen der Messanordnung sind in den Unteransprüchen 8 bis 11 definiert.

### BESCHREIBUNG DER ERFINDUNG

Bei dem neuen Verfahren werden die Marklerungspunkte in Form eines zufälligen Punktemusters vorgesehen. Zusätzlich werden die druckempfindliche Farbe und das Punktemuster einander überdeckend in denselben Oberflächenbereichen des Objekts vorgesehen. D. h., dass in denselben Oberflächenbereichen jeweils sowohl eine Schicht aus PSP als auch ein zufälliges Punktemuster vorliegt.

In einer konkreten Ausführungsform des neuen Verfahrens wird das zufällig Punktemuster unterhalb der aktiven Schicht der PSP vorgesehen. Dabei kann es auf einer auf der Oberfläche des Objekts angeordneten optischen Abschirmschicht angeordnet werden. Eine solche einheitlich eingefärbte Abschirmschicht bietet die Möglichkeit, das zufällige Punktemuster mit hohem Kontrast auszubilden. Dieser Kontrast gefährdet potentiell den einheitlichen Hintergrund für das Messen von Eigenschaften der PSP. Dem kann jedoch dadurch begegnet werden, dass eine druckempfindliche Substanz und eine Referenzsubstanz der PSP in optischen Wellenlängenbereichen gemessen werden, die sich von den Wellenlängenbereichen des Kontrasts zwischen dem Punktemuster und der Abschirmschicht unterscheiden. Mit anderen Worten wird das Punktemuster vor der Abschirmschicht in den Wellenlängenbereichen, in denen die druckempfindliche Substanz und die Referenzaubstanz gemessen werden, nicht aufgelöst.

Die Trennung zwischen dem Messen der PSP und dem Abbilden des zufälligen Punktemusters kann durch dedizierte Kameras realisiert werden, die Bilder in jeweils einem Wellenlängenbereich aufnehmen. Eine Kamera kann aber auch zum Messen sowohl von Eigenschaften der druckempfindlichen Farbe als auch zum Bestimmen etwalger Deformationen des Objekts durch Abbildung des Punktemusters zu verschiedenen Zeitpunkten verwendet werden, wenn der Kamera hierfür jeweils unterschiedliche Filter vorgeschaltet werden.

Dennoch ist es bevorzugt, wenn bei dem neuen Verfahren mehrere Kameras zum Messen von Eigenschaften der druckempfindlichen Farbe und zur Bestimmung etwaiger Deformationen des Objekts durch Abbilden des Punktemusters verwendet werden. Diese Kameras werden jedoch vorzugsweise aus unterschiedlichen Richtungen auf das Objekt gerichtet. Hierdurch wird nicht nur ermöglicht, Deformationen des Objekts räumlich aufzulösen, sondern es können auch Einflüsse insbesondere auf die Abbildungen des Punktemusters aber auch beim Messen von Eigenschaften der druckempfindlichen Farbe aufgrund von Dlchtegradientenfeldern zwischen den Kameras und dem Objekt extrahiert werden. Diese Extraktion ermöglicht es einerseits Fehler bei der Bestimmung von Deformationen der Oberfläche des Objekts aufgrund des Dichtegradientenfelds zu vermeiden und andererseits das Dichtegradientenfeld über der Oberfläche des Objekts selbst zu analysieren.

Das zufällige Punktemuster kann bei dem neuen Verfahren mit zusätzlichen Markierungepunkten an der Oberfläche des Objekts kombiniert werden, um die Lage des Objekts im Raum über diese zusätzlichen Markierungspunkte zu erfassen. Es ist aber auch möglich, Punktgruppen des zufälligen Punktemusters zu individualisieren und bestimmten Punkten des Objekts direkt zuzuordnen. Dies kann sogar soweit gehen, dass alle Bereiche des zufälligen Punktemusters bestimmten Bereichen des Objekts unmittelbar zugeordnet werden. Hierdurch steht im Vergleich zum Stand der Technik eine extrem große Anzahl von Markierungspunkten zur Verfügung, um die Lage des Objekts im Raum zu bestimmen. Bei dieser großen Anzahl von Markierungspunkten besteht selbst unter ungünstigen Bedingungen keine Gefahr, dass beispielsweise aufgrund von Dichteschwankungen über einem Bereich der Oberfläche die genaue Lage des Objekts im Raum nicht mehr erfasst werden kann. Die Lagebestimmung des Objekts im Raum mit Hilfe des zufälligen Punktemusters ist ein zusätzlicher Aspekt der vorliegenden Erfindung neben der Bestimmung von Deformationen der Oberfläche des Objekts mit Hilfe des zufälligen Punktemusters.

Die neue Messanordnung ist bei der Beschreibung des neuen Verfahrens bereits mit beschrieben worden. Sie wird überdies aus der nachfolgenden Figurenbeschreibung deutlich hervorgehen. Um die Ausbildung der neuen Messanordnung zu erleichtem, kann der PSP ein beispielsweise blaues Farbpigment zugesetzt sein, dessen direkt sichtbare Verteilung auf einer Oberfläche die Verteilung der PSP anzeigt.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bautelle zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abwelchend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand eines in der Figur skizzierten Ausführungsbeispiels weiter erläutert und beschrieben.

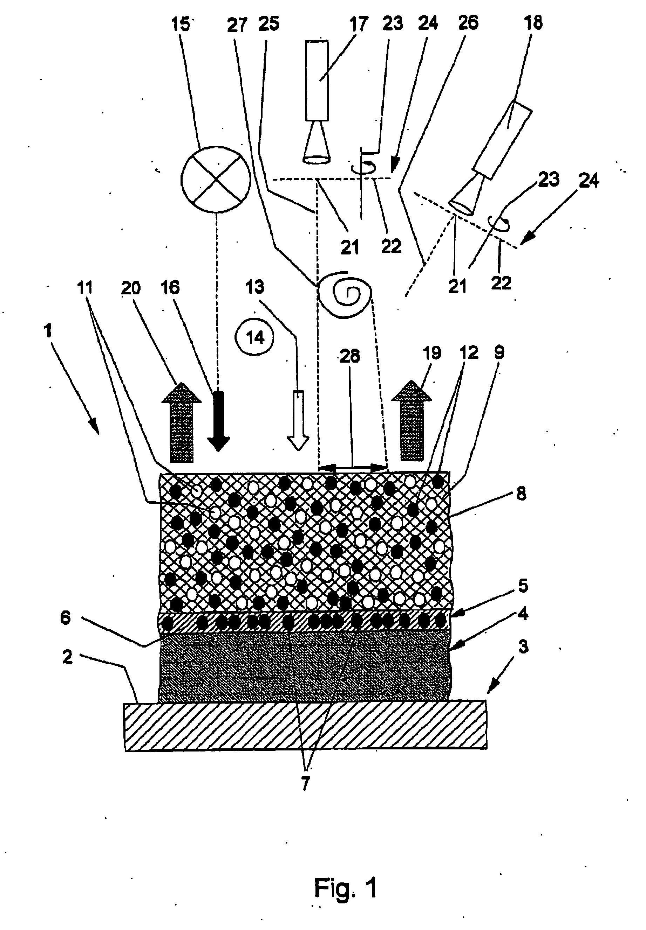

- Fig. 1: zeigt ein Prinzipschaubild der neuen Messanordnung zur Durchführung des neuen Verfahrens mit einem vergrößerten Querschnitt durch die Oberfläche eines Objekts, an dem das Verfahren durchgeführt wird.

### FIGURENBESCHREIBUNG

Fig. 1 zeigt im unteren Tell einen stark vergrößerten Querschnitt durch einen Schichtaufbau 1 auf der Oberfläche 2 eines Objekts 3. Der Schichtaufbau 1 dient dazu, sowohl eine Druckvertellung über der Oberfläche 2 des Objekts 3 als auch Deformationen der Oberfläche 2 des Objekts 3 zu bestimmen. Der Schichtaufbau 1 auf der Oberfläche 2 umfasst von der Oberfläche 2 aus gesehen zunächst eine Abschirmschicht 4. Die Abschirmschicht 4 färbt die Oberfläche 2 des Objekts 3 einheitlich ein. Beispielsweise kann die Abschirmschicht 4 Titandioxidpigmente aufweisen, um die Oberfläche 2 des Objekts 3 weiß einzufärben. Auf der Abschirmschicht 4 ist eine Schicht 5 angeordnet. Die Schicht 5 besteht aus einer transparenten Matrix 6, in der ein zufälliges Punktemuster 7 mit optischem Kontrast zu der Abschirmschicht 4 ausgebildet ist. Die Schicht 5 dient neben der Ausbildung bzw. Aufnahme des Punktemusters 4 auch als Kontaktvermittlungsschicht zwischen der Abschirmschicht 4 und einer aktiven Schicht 8 aus einer druckempfindlichen Farbe (englisch: Pressure Sensitive Paint = PSP) 9. Das Punktemuster 7 kann auch auf der Abschirmschicht 4 und damit zwischen den Schichten 4 und 5 oder auf der Schicht 5 und damit zwischen der Schicht 5 und der PSP 9 vorgesehen sein. Soweit eine Kontaktvermittlungsschicht zwischen der Abschirmschicht 4 und der PSP 9 entbehrlich ist, kann das Punktemuster 7 auch direkt dazwischen liegen, d. h. ohne die Matrix 6. Die PSP 9 umfasst eine offenporige Matrix 10, beispielsweise in Form eines Silikonpolymers, in die eine druckempfindliche Substanz 11 und eine Referenzsubstanz 12 eingebettet sind. Die offenporige Matrix 10 ermöglicht das Eindringen von Sauerstoff 13 aus der Umgebung 14 des Objekts 3 in die aktive Schicht 8. Von dem Sauerstoff 13 wird das Lumineszenzverhalten der druckempfindlichen Substanz 11, bei der es sich um eine Pyrenverbindung handeln kann, beeinflusst, wenn die druckempfindliche Substanz 11 durch eine Anregungslichtquelle 15 mit Anregungslicht 16 zu Lumineszenz angeregt wird. Bei druckempfindlichen Pyrenverbindungen ist es konkret so, dass die Lumineszenz mit der zunehmenden Konzentration von Sauerstoff 13 im Umfeld der Pyrenverbindungen abnimmt. Die Abnahme der Lumineszenz kann einem Sauerstoffpartialdruck der sich aus der Umgebung 14 des Objekts 3 binnen sehr kurzer Zeiträume von wenigen Sekunden bis in die offenporige Matrix 10 ausbreitet, direkt zugeordnet werden. Wenn also mit einer Kamera 17 oder 18 die Oberfläche 2 in Bezug auf Lumineszenzlicht 19 von der Substanz 11 beobachtet wird, entspricht die Intensitätsverteilung des Lumineszenzlichts 19 über der Oberfläche 2 der Druckvertellung des Sauerstoffpartialdrucks über der Oberfläche 2. Soweit man davon ausgeht, dass der Sauerstoffpartialdruck ein Maß für den absoluten Druck über der Oberfläche 2 ist, kann also auch der letztere aus der Verteilung der Intensität des Lumineszenzlichts 19 bestimmt werden. Genau gilt dies aber nur dann, wenn das Anregungslicht 16 von der Anregungslichtquelle 15 die Substanz 11 homogen über der Oberfläche 2 anregt. Da dies in der Praxis nicht sicherzustellen ist, ist In der aktiven Schicht 8 die Referenzsubstanz 12 vorgesehen. Die Referenzsubstanz 9 kann ein Europlumkomplex sein. In Jedem Fall sendet sie Lumineezenzlicht 20 aus, dessen Intensität nicht von der Anwesenheit des Sauerstoffs 13 oder dessen Partialdruck, sondern nur von der Intensität des Anregungslichts 16 abhängt und das sich in der Wellenlänge von dem Lumineszenzlicht 19 von der druckempfindlichen Substanz 11 unterscheidet. So kann unter Verwendung unterschiedlicher Filter 21 und 22 vor den Kameras 17 und 18 selektiv das Lumineszenzlicht 20 von der Referenzsubstanz 12 als Maß für dle Verteilung der Intensität des Anregungslichts 16 über der Oberfläche 2 und das Lumineszenzlicht 19 von der druckempfindlichen Substanz 11 als Maß für den Sauerstoffpartialdruck beobachtet werden. Die Kameras 17 und 18 sind zusätzlich dazu vorgesehen, dass Punktemuster 7 zu unterschledlichen Zeltpunkten abzubilden, um aus einer Verschiebung einzeiner Punkte oder Punktegruppen des Punktemusters 7 auf eine Deformation der Oberfläche 2 und/oder eine Verlagerung des Objekts 3 zu schließen. Um das Punktemuster 7 ungestört von dem Fluoreszenzlicht 19 bzw. 20 abbilden zu können und um auch mit dem Punktemuster 7 nicht die Abbildungen des Fluoreszenzlichts 18 bzw. 20 zu stören, weist das Punktemuster 7 gegenüber der Abschirmschicht 4 einen Kontrast in einem Wellenlängenbereich auf, der sich von den Wellenlängenbereichen des Lumineszenzlichts 19 und des Lumineszenzlichts 20 so unterscheidet, dass die Kameras 17 und 18 durch Verwendung eines zusätzlichen Filters für die Abbildung des Punktomusters 7 sensibilisiert und für das Lumineazenzlicht 19 bzw. 20 desensibilisiert werden können. Umgekehrt sind die Filter 21 und 22 für die Betrachtung des Fluoreszenzlichts 19 bzw. 20 so ausgelegt, dass sie nicht nur die beiden Arten von Fluoreszenzlicht 19 und 20 voneinander trennen, sondern dass die Kamera 17 bzw. 18 auch den Kontrast zwischen dem Punktemuster 7 und der Abschirmschicht 4 nicht auflöst. Alle Filter, d. h. die Filter 21 und 22 und das zusätzliche Filter zum Abbilden das Punktemusters 7 vor der Abschirmachicht 4 können jeweils an einem um eine Drehachse 23 verdrehbaren Filterred 24 vorgesehen und so einzein vor die jeweilige Kamera 17 und 18 verschwenkbar sein. Die Beobachtung des Punktemusters 7 zu unterschiedlichen Zeitpunkten ermöglicht es, Deformation der Oberfläche 2 zwischen diesen Zeitpunkten aufzulösen, weil diese zur Verlagerung einzelner Punkte und Punktgruppen des Punktemusters 7 führen. Außerdem kann bei Zuordnung einzeiner Punkte oder Punktgruppen zu bestimmten Punkten des Objekts 3 mit Hilfe der Bestimmung der augenblicklichen Lage das Punktemusters 7 auch die augenblickliche Lage des Objekts 3 im Raum bestimmt werden. Für die räumliche Bestimmung der Lage des Punktemusters 7 muss dieses mit mindestens zwei Kameras 17 und 18 aus unterschiedlichen Richtungen abgebildet werden. Die Abbildung aus mindestens zwei Richtungen 25 und 26 hat auch den Sinn, scheinbare Lageveränderungen von Punkten des Punktemusters 7 aufgrund von Turbulenzen 27 oder anderen Quellen von Dichtegradienten über der Oberfläche 2 von echten Lageveränderungen aufgrund von Deformationen der Oberfläche 2 zu unterscheiden. Dichtegradienten verändern die Brechungselgenschaft der Luft zwischen dem Objekt 3 und der Jeweiligen Kamera 17 bzw. 18 und können so die Abbildung eines Punkts des Punktemusters 7 mit der jeweiligen Kamera 17 bzw. 18 In seiner Lage gegenüber anderen Punkten verschieben, ohne dass der abgebildete Punkt 7 selbst gegenüber den anderen Punkten verschoben wurde. Fig. 1 skizziert, wie eine Turbulenz 27 die Abbildung von Punkten des Punktemusters 7 in einem Bereich 28 beeinträchtigt, während die aus einer anderen Richtung 26 auf die Oberfläche 2 blickende Kamera 18 von dieser Turbulenz in einem ganz anderen Bereich betroffen ist. So kann durch den Abgleich der Abbildungen des Punktemusters 7 mit den Kameras 17 und 18 der Effekte der Turbulenz 27 separiert werden. Damit Ist es aber auch möglich, die Turbulenz 27 selbst anhand der Abbildungen des Punktemusters 7 zu erfassen und zu analysieren.

### BEZUGSZEICHENLISTE

- 1: Schichtaufbau
- 2: Oberfläche
- 3: Objekt
- 4: Abschirmschicht
- 5: Schicht
- 6: Matrix
- 7: Punktemuster
- 8: Schicht
- 9: PSP
- 10: Matrix
- 11: Substanz
- 12: Referenzsubstanz
- 13: Sauerstoff
- 14: Umgebung
- 15: Anregungslichtquelle
- 16: Anregungslicht
- 17: Kamera
- 18: Kamera
- 19: Lumineszenzlicht
- 20: Lumineszenzlicht
- 21: Filter
- 22: Filter
- 23: Drehachse
- 24: Filterrad
- 25: Richtung
- 26: Richtung
- 27: Turbulenz

## Patentansprüche

1. Verfahren zur Bestimmung der Druckverteilung an der Oberfläche (2) eines Objekts (3) und zur Bestimmung etwaiger Deformationen des Objekts (3), wobei eine druckempfindliche Farbe (9) und Markierungspunkte auf die Oberfläche (2) aufgebracht werden, wobei Eigenschaften der druckempfindlichen Farbe auf der Oberfläche (2) gemessen werden und wobei die Markierungspunkte auf der Oberfläche (2) zu unterschiedlichen Zeitpunkten abgebildet werden, **dadurch gekennzeichnet, dass** die Markierungspunkte in Form eines zufälligen Punktemusters (7) auf die Oberfläche (2) aufgebracht werden und dass die druckempfindliche Farbe (9) und das Punktemuster (7) einander überdeckend in denselben Bereichen der Oberfläche (2) des Objekts (3) auf die Oberfläche (2) aufgebracht werden.

2. Verfahren nach Anspruch 1, **dadurch gekennzeichnet, dass** das zufällige Punktemuster (7) unterhalb einer aktiven Schicht (8) der druckempfindlichen Farbe (9) auf die Oberfläche (2) aufgebracht wird.

3. Verfahren nach Anspruch 2, **dadurch gekennzeichnet, dass** das Punktemuster (7) auf eine auf der Oberfläche (2) des Objekts angeordneten optischen Abschirmschicht (4) aufgebracht wird.

4. Verfahren nach Anspruch 3, **dadurch gekennzeichnet, dass** eine druckempfindliche Substanz (11) und eine Referenzsubstanz (12) in optischen Wellenlängenberelchen gemessen werden, die sich von den Wollenlangenbereichen des Kontrasts zwischen dem Punktemuster (7) und der Abschirmschicht (4) unterscheiden.

5. Verfahren nach Anspruch 4, **dadurch gekennzeichnet, dass** eine Kamera (17, 18) mit unterschiedlichen Filtem (21, 22) zum Messen von Eigenschaften der druckempfindlichen Farbe (9) und zur Bestimmung etwaiger Deformationen des Objekts (3) durch Abbilden des Punktemusters (7) zu verschiedenen Zeitpunkten verwendet wird.

6. Verfahren nach einem der Ansprüche 1 bis 5, **dadurch gekennzeichnet, dass** mindestens zwei Kameras (17, 18) zum Messen von Eigenschaften der druckempfindlichen Farbe (9) und zur Bestimmung etwaiger Deformationen das Objekts (3) durch Abbilden des Punktemusters (7) zu verschiedenen Zeitpunkten aus untershiedlichen Richtungen (26, 27) auf das Objekt (3) gerichtet werden.

7. Messanordnung zur Durchführung des Verfahrens nach einem der Ansprüche 1 bis 6, mit einem Objekt auf dessen Oberfläche eine druckempflndliche Farbe und Marklerungspunkte vorgesehen sind und mit mindestens einer auf das Objekt gerichteten Kamera zum Messen von Eigenschaften der druckempfindlichen Farbe und zur Bestimmung etwaiger Deformationen des Objekts durch Abbilden der Marklerungspunkte zu verschiedenen Zeitpunkten, **dadurch gekennzeichnet, dass** die Marklerungspunkte ein zufälliges Punktemuster (7) ausbilden und dass die druckempfindliche Farbe (9) und das Punktemuster (7) einander überdeckend in denselben Bereichen der Oberfläche (2) des Objekte (3) vorgesehen sind.

8. Messanordnung nach Anspruch 7, **dadurch gekennzeichnet, dass** das zufällige Punktemuster (7) unterhalb einer aktiven Schicht (8) der druckempfindlichen Farbe (9) vorgesehen ist.

9. Messanordnung nach Anspruch 8, **dadurch gekennzeichnet, dass** das Punktemuster (7) auf einer auf der Oberfläche (2) des Objekts (3) angeordneten optischen Abschirmschicht (4) angeordnet ist

10. Messanordnung nach einem der Ansprüche 7 bis 9, **dadurch gekennzeichnet, dass** der Kamera (17, 18) unterschledliche Filter (21, 22) zum Messen von Eigenschaften der druckempfindlichen Farbe (9) und zur Bestimmung etwalger Deformationen des Objekts (3) durch Abbilden des Punktemusters (7) zugeordnet sind.

11. Messenordnung nach einem der Ansprüche 7 bis 10, **dadurch gekennzeichnet, dass** mindestens zwei Kameras (17, 18) zum Messen von Eigenschaften der druckempfindlichen Farbe (9) und zur Bestimmung etwaiger Deformationen des Objekts (3) durch Abbilden des Punktemusters (7) aus unterschiedlichen Richtungen (25, 26) auf das Objekt (3) gerichtet sind.

## Claims

1. Method of determining the pressure distribution on the surface (2) of an object (3) and of determining possible deformations of the object (3), wherein a pressure sensitive paint (9) and marker dots are applied onto the surface (2), wherein properties of the pressure sensitive paint on the surface (2) are measured, and wherein the marker dots on the surface (2) are imaged at different points in time, **characterized in that** the marker dots are applied to the surface (2) in the form of a random dot pattern (7), and **in that** the pressure sensitive paint (9) and the dot pattern (7) are applied onto the surface (2) in the same areas of the surface (2) of the object (3) in an overlapping way.

2. The method of claim 1 **characterized in that** the random dot pattern (7) is applied beneath an active layer (8) of the pressure sensitive paint (9) onto the surface (2).

3. The method of claim 2, **characterized in that** the dot pattern (7) is applied onto an optical shielding layer (4) arranged on the surface (2) of the object.

4. The method of claim 3, **characterized in that** a pressure sensitive substance (11) and a reference substance (12) are measured in optical wavelength ranges which differ from the wavelength ranges of the contrast between the dot pattern (7) and the shielding layer (4).

5. The method of claim 4, **characterized in that** a camera (17, 18) with different filters (21, 22) is used for measuring properties of the pressure sensitive paint (9) and for determining possible deformations of the object (3) by imaging the dot pattern (7).

6. The method of any of the claims 1 to 5, **characterized in that** at least two cameras (17, 18) are directed out of different direction (26, 27) onto the object (3) for measuring properties of the pressure sensitive paint (9) and for determining possible deformations of the object (3) at different points in time.

7. A measuring apparatus for carrying out the method of any of the claims 1 to 6, comprising an object on whose surface a pressure sensitive paint and marker dots are provided, and at least one camera directed onto the object for measuring properties of the pressure sensitive paint and for determining possible deformations of the object by imaging the marker dots at different points in time, **characterized in that** the marker dots form a random dot pattern (7), and **in that** the pressure sensitive paint (9) and the marker dots (7) are provided in the same areas of the surface (2) of the object (3) in an overlapping way.

8. The measuring apparatus of claim 7, **characterized in that** the random dot pattern (7) is provided beneath an active layer (8) of the pressure sensitive paint (9).

9. The measuring apparatus of claim 8, **characterized in that** the dot pattern (7) is arranged on an optical shielding layer (4) arranged on the surface (2) of the object (3).

10. The measuring apparatus of any of the claims 7 to 9, **characterized in that** different filters (21, 22) for measuring properties of the pressure sensitive paint (9) and for determining possible deformations of the object (3) by imaging the dot pattern (7) are associated to the camera (17, 18).

11. The measuring apparatus of any of the claims 7 to 10, **characterized in that** at least two cameras (17, 18) are directed onto the object (3) out of different directions (25, 26) for measuring properties of the pressure sensitive paint (9) and for determining possible deformations of the object (3) by imaging the dot pattern (7).

## Revendications

1. Procédé destiné à déterminer la répartition de la pression sur la surface (2) d'un objet (3) et destiné à déterminer d'éventuelles déformations de l'objet (3), une couleur (9) sensible à la pression et des points de marquage étant appliqués sur la surface (2), les propriétés de la couleur sensible à la pression étant mesurées sur la surface (2) et les points de marquage sur la surface (2) étant reproduits à des instants différents, **caractérisé en ce que** les points de marquage sont appliqués sur la surface (2) sous la forme d'un motif à points (7) aléatoire, et **en ce que** la couleur (9) sensible à la pression et le motif à points (7) sont appliqués sur la surface (2) en se recouvrant mutuellement dans les mêmes zones de la surface (2) de l'objet (3).

2. Procédé selon la revendication 1, **caractérisé en ce que** le motif à points (7) aléatoire est déposé sur la surface (2) en dessous d'une couche (8) active de la couleur (9) sensible à la pression.

3. Procédé selon la revendication 2, **caractérisé en ce que** le motif à points (7) est déposé sur une couche de protection (4) optique, disposée sur la surface (2) de l'objet.

4. Procédé selon la revendication 3, **caractérisé en ce qu'**une substance (11) sensible à la pression et une substance de référence (12) sont mesurées dans des zones de longueurs d'ondes optiques, qui se différencient des zones de longueurs d'ondes du contraste entre le motif à points (7) et la couche de protection (4).

5. Procédé selon la revendication 4, **caractérisé en ce qu'**une caméra (17, 18) avec des filtres (21, 22) différents est utilisée pour mesurer les propriétés de la couleur (9) sensible à la pression et pour déterminer d'éventuelles déformations de l'objet (3) par la reproduction du motif à points (7) à des instants différents.

6. Procédé selon l'une quelconque des revendications 1 à 5, **caractérisé en ce qu'**au moins deux caméras (17, 18) sont dirigées sur l'objet (3) à partir de directions (26, 27) différentes pour mesurer les propriétés de la couleur (9) sensible à la pression et pour déterminer d'éventuelles déformations de l'objet (3) par la reproduction du motif à points (7) à des instants différents.

7. Dispositif de mesure destiné à la mise en oeuvre du procédé selon l'une quelconque des revendications 1 à 6, comportant un objet, sur la surface duquel sont prévus une couleur sensible à la pression et des points de marquage, et comportant au moins une caméra dirigée sur l'objet pour mesurer les propriétés de la couleur sensible à la pression et pour déterminer d'éventuelles déformations de l'objet par la reproduction des points de marquage à des instants différents, **caractérisé en ce que** les points de marquage forment un motif à points (7) aléatoire et **en ce que** la couleur (9) sensible à la pression et le motif à points (7) sont prévus en se recouvrant mutuellement dans les mêmes zones de la surface (2) de l'objet (3).

8. Dispositif de mesure selon la revendication 7, **caractérisé en ce que** le motif à points (7) aléatoire est prévu en dessous d'une couche (8) active de la couleur (9) sensible à la pression.

9. Dispositif de mesure selon la revendication 8, **caractérisé en ce que** le motif à points (7) est disposé sur une couche de protection (4) optique, disposée sur la surface (2) de l'objet (3).

10. Dispositif de mesure selon l'une quelconque des revendications 7 à 9, **caractérisé en ce qu'**à la caméra (17, 18) sont associés des filtres (21, 22) différents pour mesurer les propriétés de la couleur (9) sensible à la pression et pour déterminer d'éventuelles déformations de l'objet (3) par la reproduction du motif à points (7).

11. Dispositif de mesure selon l'une quelconque des revendications 7 à 10, **caractérisé en ce qu'**au moins deux caméras (17, 18) sont dirigées sur l'objet (3) à partir de directions (26, 27) différentes pour mesurer les propriétés de la couleur (9) sensible à la pression et pour déterminer d'éventuelles déformations de l'objet (3) par la reproduction du motif à points (7).
